# EUROPEAN PATENT APPLICATION

(11) **EP 4 397 785 A1**
(43) Date of publication of application: **10.07.2024**
(21) Application number: 22864718.6
(22) Date of filing: 02.09.2022
(51) Int. Cl.: C23C 22/00, C21D 9/46, C22C 38/00, C22C 38/06, H01F 1/147

(54) **NON-ORIENTED ELECTROMAGNETIC STEEL SHEET AND METHOD FOR PRODUCING SAME**

(30) Priority: 02.09.2021 JP 2021142954
(71) Applicant: NIPPON STEEL CORPORATION, Chiyoda-ku Tokyo 100-8071 (JP)
(72) Inventor: TAKEDA, Kazutoshi, Tokyo 100-8071 (JP); FUKUCHI, Minako, Tokyo 100-8071 (JP); NATORI, Yoshiaki, Tokyo 100-8071 (JP); FUJII, Hiroyasu, Tokyo 100-8071 (JP); TAKATANI, Shinsuke, Tokyo 100-8071 (JP)
(74) Representative: Vossius & Partner Patentanwälte Rechtsanwälte mbB
(86) International application number: PCT/JP2022/033073
(87) International publication number: WO 2023/033136

(57) **Abstract**

A non-oriented electrical steel sheet 1 of the present embodiment is provided with a base metal steel sheet 10 and an insulating coating film 20 formed on the surface of the base metal steel sheet 10. The insulating coating film 20 contains metal phosphate, organic resin, and nitrite. The insulating coating film 20 has a nitrogen content of 0.05-5.00% by mass.

## Description

### TECHNICAL FIELD

The present invention relates to a non-oriented electrical steel sheet and a manufacturing method therefor.

### BACKGROUND

Non-oriented electrical steel sheets are used in iron cores (motor cores (rotor cores and stator cores)) for motors for driving small home appliances such as audio equipment, and motors for driving hybrid cars and electric vehicles.

An insulating coating film is formed on a surface of the non-oriented electrical steel sheet. The insulating coating film, for example, ensures insulation between electrical steel sheets stacked as a stator core. That is, the insulating coating film must have excellent insulation properties. The insulating coating film is also required to adhere to the steel sheet. Therefore, the insulating coating film is required to have adhesion as well as insulation properties.

Insulating coating films for non-oriented electrical steel sheets with excellent insulation and adhesion properties are proposed in, for example, WO 2016/136515 (Patent Document 1), JP 2017-141480A (Patent Document 2), and JP 2013-249486 (Patent Document 3).

The electrical steel sheet disclosed in Patent Document 1 has, on its surface, an insulating coating film including a binder containing 100 parts by mass of a metal phosphate and 1 to 50 parts by mass of an organic resin having an average particle diameter of 0.05 to 0.50 µm, and a carboxylic acid compound having a carbon number of 2 to 50 whose content relative to 100 parts by mass of the solid content of the binder is 0.1 to 10.0 parts by mass. The organic resin is one or more selected from acrylic resins, epoxy resins, and polyester resins. The Patent Document 1 discloses that even in the case that the insulating coating film does not contain a chromium compound, it has excellent adhesion, corrosion resistance, appearance, and rust prevention properties on edge surfaces after punching, in addition to excellent insulation properties.

The electrical steel sheet disclosed in Patent Document 2 has, on its surface, an insulating coating film composed of 100 mass parts of a metal phosphate as a main component, 1 to 50 mass parts of an acrylic resin having an average particle diameter of 0.05 to 0.50 µm and utilizing a reactive emulsifier, and 0.5 to 10 mass parts of a polyalcohol, wherein the metal element of the metal phosphate is a mixture of at least a divalent metal element and a trivalent metal element, wherein a mixing ratio of the divalent metal element is 30 to 80% by mass with respect to a total mass of the metal element of the metal phosphate. The insulating coating film has good uniformity, has no insulation problems, and has excellent adhesion to resin during electrodeposition coating and molding, even if this insulating coating film is applied thinly to improve the space factor, according to Patent Document 2.

The treatment solution for forming an insulating coating film on an electrical steel sheet disclosed in Patent Document 3 is characterized in that it contains, in an aqueous medium, a polyvalent metal primary phosphate with Al and/or Mg as major components, a nitric acid compound selected from nitric acid and polyvalent metal nitrates, and a chelating agent selected from phosphonic acid compounds and pyrophosphoric acid. The insulating coating film obtained from this treatment solution improves whitening-resistance immediately after manufacturing and during storage, and adhesion after bluing treatment, according to the patent document 3.

### LIST OF PRIOR ART DOCUMENTS

### PATENT DOCUMENT

Patent Document 1: WO 2016/136515
Patent Document 2: JP2017-141480A
Patent Document 3: JP2013-249486A

### SUMMARY OF INVENTION

### TECHNICAL PROBLEM

By the way, the manufacturing method of a stator core using a non-oriented electrical steel sheet is as follows. The non-oriented electrical steel sheet is punched into a predetermined shape. Steel sheets (core blanks) after punching are stacked and adhered to produce a laminate core. Coils are placed in slots of the stator core. During the punching process, punched non-oriented electrical steel sheets are subjected to processing strain, which deteriorates their magnetic properties. Therefore, stress relief annealing may be performed to remove the processing strain. The stress relief annealing is performed at a high temperature of 700°C or higher. The insulating coating film heated during the stress relief annealing may produce decomposition products due to heating.

As mentioned above, excellent adhesion is required for the insulating coating film of non-oriented electrical steel sheets, even after stress relief annealing. If the adhesion is low after stress relief annealing, the film fragments peeled off from the steel sheet will enter between the stator core and the rotor core, and interfere with rotation of the stator core and rotor core. In some cases, the rotor core may be damaged.

An objective of the present invention is to provide a non-oriented electrical steel sheet with an insulating coating film with excellent adhesion after stress relief annealing, and a method for manufacturing a non-oriented electrical steel sheet with an insulating coating film with excellent adhesion after stress relief annealing.

### SOLUTION TO PROBLEM

A non-oriented electrical steel sheet according to the present invention includes:
a base metal steel sheet, and
an insulating coating film formed on a surface of the base metal steel sheet,
wherein the insulating coating film includes: a metal phosphate, an organic resin, and a nitrite; and
a nitrogen content of the insulating coating film is 0.05 to 5.00 mass%.

A manufacturing method for a non-oriented electrical steel sheet according to the present invention includes:
a process for applying a surface treatment agent containing a metal phosphate, an organic resin, and a nitrite, to a surface of a base metal steel sheet; and
a process for forming an insulating coating film with a nitrogen content of 0.05 to 5.00 mass% by heating the base metal steel sheet coated with the surface treatment agent under conditions: heat treatment temperature of 200 to 450°C, dew point of -30 to 30°C, heat treatment time of 10 to 120 seconds.

### ADVANTAGEOUS EFFECT OF INVENTION

The non-oriented electrical steel sheet of the present invention is provided with an insulating coating film with excellent adhesion after stress relief annealing. The manufacturing method for the non-oriented electrical steel sheet of the present invention is capable of manufacturing a non-oriented electrical steel sheet with an insulating coating film that has excellent adhesion after stress relief annealing.

### BRIEF DESCRIPTION OF DRAWINGS

[Figure 1] Figure 1 is a cross-sectional view of a non-oriented electrical steel sheet according to the present embodiment, parallel to a direction of the sheet thickness.
[Figure 2] Figure 2 is an enlarged cross-sectional view of the insulating coating film 20 in Figure 1.

### DESCRIPTION OF EMBODIMENTS

The present inventors investigated and examined adhesion properties of the insulating coating film of non-oriented electrical steel sheets after stress relief annealing.

First, the present inventors examined means to improve the adhesion of the insulating coating film on non-oriented electrical steel sheets. In the above-mentioned Patent Documents 1 and 2, it is stated that an insulating coating film containing a metal phosphate and an organic resin has excellent adhesion. Therefore, the present inventors examined means to further improve the adhesion of the insulating coating film containing a metal phosphate and an organic resin.

The insulating coating film on non-oriented electrical steel sheets is produced as follows. A surface treatment agent containing a metal phosphate and an organic resin is applied to a base metal steel sheet. Next, the base metal steel sheet coated with the surface treatment agent is heated to form an insulating coating film. The process of heating the base metal steel sheet coated with the surface treatment agent to form the insulating coating film is called the baking process.

As a result of the study of the present inventors, it was found that coarse bubbles may be generated during the baking process in the case of insulating coating films containing the above-mentioned metal phosphate and organic resin. In the insulating coating film containing coarse bubbles, the insulating coating film is thin on surfaces of the coarse bubbles. The strength of the insulating coating film in the thin areas is low. When exposed to high temperature by stress relief annealing, stress is generated in the insulating coating film due to thermal expansion of the organic resin. The stress generated during stress relief annealing causes the insulating coating film in the thin areas to peel off. The insulating coating film partially delaminated has low strength and poor adhesion. The present inventors believed that the adhesion of the insulating coating film containing the metal phosphate and the organic resin after stress relief annealing may be reduced due to the above mechanism.

Therefore, the present inventors considered that if coarse bubbles were suppressed during the baking process, the adhesion of the insulating coating film after stress relief annealing would be enhanced. As a result of the diligent study of the present inventors, it has been found that it is effective to add nitrite to the insulating coating film containing a metal phosphate and an organic resin. The reason for this is not certain, but is considered as follows.

Nitrite decomposes thermally upon heating and generates gases containing N or O. If nitrite is contained in the surface treatment agent, the nitrite partially decomposes to generate gas during the baking process. The gas is contained in the insulating coating film as fine bubbles. By generating a small amount of gas uniformly, agglomeration of the gas during the baking process is suppressed. As a result, coarse bubbles can be suppressed.

On the other hand, when nitrite is added to an insulating coating film containing an organic resin, there is concern that the organic resin may deteriorate. If the organic resin deteriorates, the adhesion of the insulating coating film after stress relief annealing is reduced. Therefore, in conventional studies, addition of nitrite to insulating coating films containing an organic resin has been avoided.

However, as a result of the study of the inventors, it has been found that if the amount of nitrite is such that the nitrogen content in the insulating coating film is 0.05 to 5.00 mass%, fine gas can be generated during the baking process while the degradation of the organic resin is suppressed. That is, the inventors' study revealed for the first time that if the amount of nitrite in the insulating coating film is such that the nitrogen content in the insulating coating film is 0.05 to 5.00 mass%, the adhesiveness of the insulating coating film after strain annealing can be improved.

The non-oriented electrical steel sheet according to the present embodiment was completed based on the technical concept described above, and the gist of it is as follows.

[1] A non-oriented electrical steel sheet including:
   a base metal steel sheet, and
   an insulating coating film formed on a surface of the base metal steel sheet,
   wherein the insulating coating film contains a metal phosphate, an organic resin, and a nitrite; and
   a nitrogen content of the insulating coating film is 0.05 to 5.00 mass%.
[2] The non-oriented electrical steel sheet described in [1],
   wherein the metal phosphate is one or more selected from the group consisting of Zn phosphate, Mn phosphate, Al phosphate and Mo phosphate.
[3] The non-oriented electrical steel sheet described in [1] or [2],
   wherein the organic resin is one or more selected from the group consisting of epoxy resins, acrylic resins, and melamine resins.
[4] The non-oriented electrical sheet described in any one of [1] to [3],
   wherein the nitrite is one or more selected from the group consisting of lithium nitrite, calcium nitrite, potassium nitrite, sodium nitrite, and ammonium nitrite.
[5] The non-oriented electrical steel sheet described in any one of [1] to [4],
   wherein the insulating coating film contains 3 to 50 parts by mass of the organic resin for 100 parts by mass of the metal phosphate.
[6] The non-oriented electrical steel sheet described in any one of [1] to [5],
   wherein the base metal steel sheet contains, by mass%,
   Si: 2.5 to 4.5%,
   Al: 0.1 to 1.5%, and
   Mn: 0.2 to 4.0%.

The above-mentioned non-oriented electrical steel sheets can be manufactured, for example, by the following manufacturing method.

[7] A method for manufacturing the non-oriented electrical steel sheet described in any one of [1] to [6], including:
a process for applying a surface treatment agent containing a metal phosphate, an organic resin, and a nitrite to a surface of a base metal steel sheet; and
a process for forming an insulating coating film with a nitrogen content of 0.05 to 5.00 mass% by heating the base metal steel sheet coated with the surface treatment agent under conditions of heat treatment temperature: 200 to 450°C, dew point: -30 to 30°C, and heat treatment time: 10 to 120 seconds.

Hereinafter, the non-oriented electrical steel sheet of the present embodiment will be described in detail.

### [Configuration of the non-oriented electrical steel sheet]

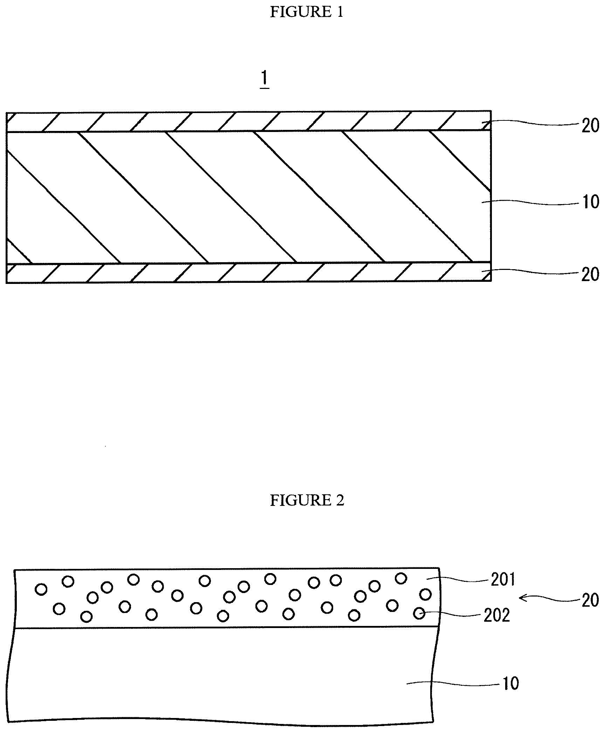

Figure 1 is a cross-sectional view of the non-oriented electrical steel sheet according to the present embodiment, parallel to a sheet thickness direction. Referring to Figure 1, the non-oriented electrical steel sheet 1 has a base metal steel sheet 10 and an insulating coating film 20. The insulating coating film 20 is formed on a surface of the base metal steel sheet 10. In Figure 1, the insulating coating film 20 is formed on the upper and lower surfaces of the base metal steel sheet 10, respectively. However, the insulating coating film 20 may be formed on only one of the surfaces of the base metal steel sheet 10. The base metal steel sheet 10 and the insulating coating film 20 are described below.

### [Base metal steel sheet 10]

The base metal steel sheet 10 can be selected from known steel sheets used as a non-oriented electrical steel sheet 1. That is, the base metal steel sheet 10 is not particularly limited as long as it is a known steel sheet for use as a non-oriented electrical steel sheet 1. It is possible to determine whether the steel sheet is a grain-oriented electrical steel sheet or a non-oriented electrical steel sheet by measuring the magnetic flux density of the steel sheet. The magnetic flux density can be measured by a well-known Tesla meter.

The chemical composition of the base metal steel sheet 10 is not directly related to the nitrogen content in the insulating coating film. Therefore, in the non-oriented electrical steel sheet 1 of the present embodiment, the chemical composition of the base metal steel sheet 10 is not particularly limited. However, it is preferable that the chemical composition of the base metal steel sheet 10 contain basic elements, optional elements as necessary, and the remainder consisting of Fe and impurities. The chemical composition of the base metal steel sheet 10 contains, for example, the following elements. Hereinafter, unless otherwise specified, "%" means mass percent.

### [Basic Element]

The chemical composition of the base metal steel sheet 10 preferably contains Si, Al and Mn as basic elements. These elements are described below.

### Si: 2.5 to 4.5%

Silicon (Si) increases the electrical resistance of steel and reduces the eddy current losses. As a result, the iron loss of the steel sheet is reduced. Si also increases the strength of steel. If the Si content is less than 2.5%, the above effects are not sufficient. On the other hand, if the Si content exceeds 4.5%, the workability of the steel decreases. Therefore, the Si content is 2.5 to 4.5%. A preferred lower limit of Si content is 2.6% and more preferably 2.7%. A preferred upper limit of Si content is 4.3% and more preferably 4.2%.

### Al: 0.1 to 1.5%

Aluminum (Al) increases the electrical resistance of steel and reduces the eddy current losses. As a result, the iron loss of the steel sheet is reduced. If the Al content is less than 0.1%, the above effects are not sufficient. On the other hand, if the Al content exceeds 1.5%, the saturation magnetic flux density decreases. Therefore, the Al content is 0.1 to 1.5%. A preferred lower limit of Al content is 0.15% and more preferably 0.2%. A preferred upper limit of Al content is 1.4% and more preferably 1.3%

### Mn: 0.2 to 4.0%

Manganese (Mn) increases the electrical resistance of steel and reduces the eddy current losses. As a result, the iron loss of the steel sheet is reduced. Mn also suppresses the formation of {111}<112> texture, which is undesirable for magnetic properties. If the Mn content is less than 0.2%, the above effects are not fully realized. On the other hand, if the Mn content exceeds 4.0%, the texture varies and the hysteresis loss tends to worsen. Therefore, the Mn content is 0.2 to 4.0%. A preferred lower limit of Mn content is 0.3% and more preferably 0.4%. A preferred upper limit of Mn content is 3.8% and more preferably 3.6%.

In the present embodiment, the chemical composition of the base metal steel sheet 10 contains impurities. Here, impurities mean elements that are mixed in as raw materials from ores or scrap, or from the manufacturing environment, etc., when the base metal steel sheet 10 is produced industrially. For example, impurities are elements such as C, P, S, N, etc.

The chemical composition of the base metal steel sheet 10 can be measured by well-known chemical analysis methods. For example, the chemical composition of the base metal steel sheet 10 can be measured using ICP-AES (Inductively Coupled Plasma-Atomic Emission Spectrometry).

### [Insulating coating film 20]

The insulating coating film 20 is formed on the surface of the base metal steel sheet 10 as described above. After processed into core blanks, the non-oriented electrical steel sheets 1 are stacked to form a motor core. The insulating coating film 20 reduces the eddy currents between steel sheets (between core blanks) after stacking. As a result, the eddy current losses in the motor core can be reduced.

Figure 2 is an enlarged cross-sectional view of the insulating coating film 20 in Figure 1. Referring to Figure 2, the insulating coating film 20 contains a metal phosphate 201 and an organic resin 202. Note that the insulating coating film 20 does not contain chromium oxide. The metal phosphate 201, the organic resin 202, and nitrite are described below.

### [Metal phosphate 201]

The metal phosphate 201 functions as a binder for the insulating coating film 20. The metal phosphate is a solid content obtained by drying an aqueous solution (insulating coating solution) containing phosphoric acid and a metal ion. The type of phosphoric acid is not limited, and any known phosphoric acid can be used. Preferred phosphoric acids are one or more selected from the group consisting of orthophosphoric acid, metaphosphoric acid, and polyphosphoric acid.

The metal ion acts on the corrosion resistance and adhesion of the insulating coating film 20. The types of metal ions are not limited. For example, the metal ion is one or more selected from the group consisting of Li, Al, Zn, Mg, Ca, Sr, Ti, Co, Mn, and Ni.

Preferably, the metal phosphate 201 contains one or more selected from the group consisting of Zn phosphate, Mn phosphate, Al phosphate, and Mo phosphate. Zn phosphate effectively increases the corrosion resistance of the insulating coating film 20. Mn phosphate enhances the heat resistance of the insulating coating film 20. Al phosphate enhances the adhesion of the insulating coating film 20 to the base metal steel sheet 10 and also enhances the heat resistance of the insulating coating film 20. Mo phosphate enhances the heat resistance of the insulating coating film 20. In addition to Al and Zn, the metal phosphate may further contain other metallic elements mentioned above other than Al and Zn.

### [Metal phosphate content]

There is no particular restriction on the content of the metal phosphate 201. Preferably, the content of the metal phosphate 201 in the insulating coating film 20 is 50% or more by mass. If the content of the metal phosphate 201 is 50% or more, its function as a binder can be sufficiently secured. The content of the metal phosphate 201 is more preferably 60% or more. The substantial upper limit of the content of the metal phosphate 201 is 95%.

Furthermore, the content of phosphorus in the insulating coating film 20 is preferably 35% or more, more preferably 40% or more, even more preferably 45% or more, and more preferably 50% or more, in terms of H₂PO₄ by mass.

The content of the metal phosphate 201 and phosphorus content can be determined by measuring the content of P and metal elements by scanning electron microscopy-energy dispersive X-ray analysis (SEM-EDS). P is converted into phosphoric acid of H₂PO₄, and its content is calculated. In addition, the content of the metal phosphate is calculated as M(H₂PO₄)ₓ (where M is the metal element and x is the valence of the metal element), and the calculated sum of the metal element and phosphoric acid is the content of the metal phosphate.

### [Organic resin 202]

Referring to Figure 2, the organic resin 202 is dispersed and contained in the metal phosphate 201, which serves as a binder. The organic resin 202 inhibits coarse growth of the metal phosphate 201 and promotes polycrystallization of the metal phosphate 201. The insulating coating film 20 is densified by the organic resin 202.

The organic resin 202 is not particularly limited, and any known organic resin can be used. Preferred organic resin 202 is one or more selected from the group consisting of acrylic resins, polystyrene resins, vinyl acetate resins, epoxy resins, polyester resins, polyurethane resins, polyamide resins, phenol resins, melamine resins, silicone resins, polypropylene resins, and polyethylene resins. More preferably, the organic resin 202 is one or more selected from the group consisting of epoxy resins, acrylic resins, and melamine resins.

Preferably, the organic resin 202 is an epoxy resin. Epoxy resins have excellent insulation properties and corrosion resistance. The type of epoxy resin is not particularly limited. For example, the epoxy resin is one or more selected from the group consisting of bisphenol A, F, B type, alicyclic type, glycidyl ether type, glycidyl ester type, biphenyl type, naphthalene type, phenolic novolac type, orthocresol novolac type, tetraphenyl ethane type, and tris(hydroxyphenyl)methane type.

More specifically, the epoxy resin is, for example, one or more selected from the group consisting of bisphenol A-diglycidyl ether, caprolactone ring-opening additions of bisphenol A-diglycidyl ether, bisphenol F-diglycidyl ether, bisphenol S-diglycidyl ether, novolac glycidyl ether, dimer acid glycidyl ether, derivatives of glycidyl ether, hexahydrophthalic acid polyglycidyl ester, dimer acid glycidyl ester, and derivatives of glycidyl ester.

### [Method of measuring metal phosphate 201 and organic resin 202 in insulating coating film 20]

The metal phosphate 201 and the organic resin 202 in the insulating coating film 20 can be measured by the following method. The presence or absence of the organic resin 202 and the type of organic resin 202 are identified by analysis using the pyrolysis-gas chromatograph/mass spectrometry (Py-GC/MS) method (hereinafter referred to as the "GC/MS method"), wherein gas generation behavior of the non-oriented electrical steel sheet 1 with insulating coating film 20 during being heated is measured by the GC/MS method. The aforementioned GC/MS method and Fourier transform infrared spectroscopy (FT-IR) may be used together to identify the organic resin.

Furthermore, chemical analysis using energy dispersive X-ray spectroscopy (EDS) or ICP-AES is performed on the insulating coating film 20, and if P and metal elements (Zn, Al, etc.) are detected, the insulating coating film 20 is determined to contain a metal phosphate.

### [Content of organic resin]

Preferably, the insulating coating film 20 contains 3 to 50 parts by mass of the organic resin 202 for 100 parts by mass of the metal phosphate 201. If the content of the organic resin 202 is 3 or more parts by mass, coarsening of the metal phosphate 201 can be sufficiently suppressed. In this case, the adhesion of the insulating coating film 20 to the base metal steel sheet 10 is enhanced more stably. On the other hand, if the content of the organic resin 202 is 50 mass parts or less, an excessive content of organic resin in the insulating coating film is suppressed. In this case, the adhesion of the insulating coating film 20 to the base metal steel sheet 10 is enhanced more stably. Therefore, the content of the organic resin in the surface treatment agent is preferably 3 to 50 parts by mass based on 100 parts by mass of the metal phosphate.

The lower limit of the content of the organic resin 202 is more preferably 5 parts by mass, even more preferably 10 parts by mass, more preferably 15 parts by mass, and even more preferably 20 parts by mass, based on 100 parts by mass of the metal phosphate 201. The upper limit of the content of the organic resin 202 is more preferably 45 parts by mass, even more preferably 40 parts by mass, more preferably 35 parts by mass, and even more preferably 30 parts by mass, based on 100 parts by mass of the metal phosphate 201. The content of the organic resin 202 in the insulating coating film 20 is less than the content of the metal phosphate 201.

The content of the organic resin 202 can be identified by the following methods. First, the type of the organic resin 202 is identified by FT-IR and/or GC/MS method. From the chemical structure of the identified organic resin 202, the carbon content of the organic resin 202 is calculated. Next, the surface of the insulating coating film 20 is measured using SEM-EDS. The measurement points are arbitrary multiple points on the surface of the insulating coating film 20.

The concentration of carbon (C) is identified by elemental analysis. The arithmetic mean of the carbon concentrations at multiple measurement points is taken as the carbon concentration of the insulating coating film 20. The weight of the insulating coating film 20 is determined by peeling off from the base metal steel sheet 10 using an alkaline solution. From the weight of the insulating coating film 20 and the carbon concentration of the insulating coating film 20, the absolute value of the carbon amount in the insulating coating film 20 is calculated. From the absolute value of the carbon amount in the insulating coating film 20 and the carbon content of the organic resin 202, the amount of the organic resin 202 in the insulating coating film 20 can be calculated.

### [Nitrite]

The insulating coating film 20 contains nitrite. Nitrite is a salt containing a nitrite ion (NO₂⁻) as an anion. Nitrite generates a small amount of gas during the baking process. The uniform generation of a small amount of gas prevents gas agglomeration during the baking process. It is inferred that, as a result, coarse bubbles are suppressed and the adhesion of the insulating coating film 20 is enhanced.

The nitrite is, for example, one or more selected from the group consisting of lithium nitrite, calcium nitrite, potassium nitrite, sodium nitrite, ammonium nitrite, magnesium nitrite, strontium nitrite, barium nitrite, cesium nitrite, silver nitrite, nickel nitrite, zinc nitrite, lead (II) dinitrite, copper (II) dinitrite and cobalt (II) dinitrite. Preferably, the nitrite is one or more selected from the group consisting of lithium nitrite, calcium nitrite, potassium nitrite, sodium nitrite, and ammonium nitrite.

Note that nitrite is chemically quite different from nitrate. As a result of the present inventors' investigations, it has been found that nitrates are not effective in suppressing coarse bubbles. Therefore, nitrite is used in the present embodiment.

### [Methods of identifying Nitrite]

Nitrite in insulating coating film 20 can be identified by the following method. A portion of the insulating coating film 20 is taken and crushed in a mortar. Distilled water is added to the mortar containing the crushed insulating coating film 20 to obtain a suspension. Arsanilic acid is added to the suspension, and the arsanilic acid reacts with the nitrite in the suspension. This synthesizes a diazonium compound. Naphthylethylenediamine is further added to the suspension, and the naphthylethylenediamine reacts with the diazonium compound. This synthesizes an azo dye. Once the azo dye is synthesized, the suspension is colored. The coloration of the suspension is checked with a colorimeter (colorimetric method). This identifies that the azo dye has been synthesized in the suspension. The presence of nitrite in the insulating coating film is identified by the above method.

### [Nitrite content]

The insulating coating film 20 contains nitrite. However, it is quite difficult to quantify the content of the nitrite in the insulating coating film 20. On the other hand, the nitrite content can be substituted by the nitrogen content in the insulating coating film 20. Therefore, in the present disclosure, the nitrite content is substituted by the nitrogen content in the insulating coating film 20.

### [Nitrogen content in insulating coating film 20]

In the insulating coating film 20 of the present embodiment, which includes the metal phosphate 201 and the organic resin 202, if the nitrogen content is less than 0.05 mass%, the nitrite content is too small. Therefore, a sufficient amount of fine gas bubbles cannot be generated during the baking process, and the adhesion of the insulating coating film 20 after stress relief annealing cannot be improved. On the other hand, in the insulating coating film 20 of the present embodiment, which includes the metal phosphate 201 and the organic resin 202, when the nitrogen content is more than 5.00 mass%, the nitrite content is too high. Accordingly, an excessive amount of gas is generated during the baking process, and the adhesion of the insulating coating film 20 after stress relief annealing cannot be improved. Therefore, the nitrogen content in the insulating coating film 20 is 0.05 to 5.00 mass%. The lower limit of the nitrogen content in the insulating coating film 20 is preferably 0.10 mass%, more preferably 0.15 mass%. The lower limit of the nitrogen content in the insulating coating film 20 is even more preferably 0.50 mass%, and more preferably 1.00 mass%. The upper limit of the nitrogen content in the insulating coating film 20 is preferably 4.80 mass%, more preferably 4.50 mass%, even more preferably 4.00 mass%, and more preferably 3.00 mass%.

### [Method of measuring nitrogen content in insulating coating film 201

The nitrogen content in the insulating coating film 20 is measured by the following method. The content of each element in the insulating coating film 20 is measured using EDS on the non-oriented electrical steel sheet 1 on which the insulating coating film 20 is formed. The analysis is performed on the surface of any five locations of the non-oriented electrical steel sheet 1 (insulating coating film 20). From the analysis results, the nitrogen content (mass%) is determined by taking the sum of the peaks of the remaining elements, excluding the peak intensity of iron (Fe), as 100% by mass.

The insulating coating film 20 may be an insulating coating film 20 consisting of a metal phosphate 201, an organic resin 202, and a nitrite. The insulating coating film 20 may further includes other components. That is, the insulating coating film 20 may be an insulating coating film 20 including a metal phosphate 201, an organic resin 202, a nitrite, and other components.

### [Other components]

The insulating coating film 20 may contain other components. The other components are, for example, water-soluble organic compounds. The water-soluble organic compounds are, for example, one or more selected from the group consisting of a surfactant, an emulsifier, a defoaming agent, and a leveling agent. The content of the other components is 5.0 parts by mass or less per 100 parts by mass of the metal phosphate 201. The upper limit of the content of the other components is preferably less than 5.0 parts by mass, more preferably 4.5 parts by mass, even more preferably 4.0 parts by mass, more preferably 3.5 parts by mass, and even more preferably 3.0 parts by mass, based on 100 parts by mass of the metal phosphate 201. The lower limit of the content of other components may be 0%. The lower limit of the content of the other components is, for example, 0.1%.

The content of water-soluble organic compounds can be measured using the GC-MS method described above. More specifically, the content of water-soluble organic compounds in the insulating coating film is measured by pyrolyzing the water-soluble organic compounds at 800°C, where the organic compounds burn or sublimate in analysis equipment.

### [Preferred thickness of insulating coating film 20]

The thickness of the insulating coating film 20 is not particularly limited. A preferred thickness of the insulating coating film 20 is 0.20 to 1.60 µm. If the coating thickness is 0.20 to 1.60 µm, the insulating coating film 20 exhibits even better insulation properties. However, even if the thickness of the insulating coating film 20 is other than 0.20 to 1.60 µm, the insulating coating film 20 exhibits excellent adhesion after stress relief annealing.

As described above, the non-oriented electrical steel sheet 1 of the present embodiment has a base metal steel sheet 10 and an insulating coating film 20 formed on the surface of the base metal steel sheet 10. The insulating coating film 20 contains a metal phosphate 201, an organic resin 202, and a nitrite. The insulating coating film 20 has a nitrogen content of 0.05 to 5.00 mass%. Therefore, the insulating coating film 20 shows excellent adhesion after stress relief annealing.

### [Manufacturing method]

An example of the manufacturing method for the non-oriented electrical steel sheet 1 of the present embodiment will be described. The manufacturing method described below is an example for manufacturing the non-oriented electrical steel sheet 1. Therefore, the non-oriented electrical steel sheet 1 may be manufactured by other manufacturing methods other than the manufacturing method described below. However, the manufacturing method described below is a suitable example of a manufacturing method for the non-oriented electrical steel sheet 1.

An example of the manufacturing method for the non-oriented electrical steel sheet 1 according to the present embodiment includes a process of applying a surface treatment agent containing a metal phosphate, an organic resin, and a nitrite to the surface of a base metal steel sheet 10 (applying process) and a process of heating the base metal steel sheet 10 coated with the surface treatment agent to form an insulating coating film 20 (baking process). Each process is described below.

### [Applying process]

In the applying process, a surface treatment agent is applied to the surface of the base metal steel sheet 10. The applying method is not limited. Any known applying method can be used. For example, a roll coater method, a spray method, a dip method, or the like can be used.

### [Surface treatment agents]

The surface treatment agent contains a metal phosphate, an organic resin, and a nitrite. The metal phosphate 201, organic resin 202 and nitrite described above are used as the metal phosphate, organic resin and nitrite in the surface treatment agent. When preparing a metal phosphate solution, it is preferable to mix at least one of the oxides, carbonates, and hydroxides of the metal ions with various phosphoric acids, such as orthophosphoric acid.

### [The content of organic resin in the surface treatment agent]

The content of the organic resin in the surface treatment agent may be the same as the content of the organic resin 202 in the insulating coating film 20 described above. In other words, the content of the organic resin in the surface treatment agent is preferably 3 to 50 parts by mass, based on 100 parts by mass of the metal phosphate.

The lower limit of the content of the organic resin in the surface treatment agent is more preferably 5 parts by mass, even more preferably 10 parts by mass, more preferably 15 parts by mass, and even more preferably 20 parts by mass, based on 100 parts by mass of the metal phosphate. The upper limit of the content of the organic resin is more preferably 45 parts by mass, even more preferably 40 parts by mass, more preferably 35 parts by mass, and even more preferably 30 parts by mass, based on 100 parts by mass of the metal phosphate. The content of the organic resin in the surface treatment agent is less than the content of the metal phosphate.

### [The content of nitrite in the surface treatment agent]

Preferably, the content of the nitrite in the surface treatment agent is 2 to 80 parts by mass based on 100 parts by mass of the metal phosphate.

The lower limit of the nitrite content is more preferably 3 parts by mass, even more preferably 5 parts by mass, more preferably 8 parts by mass, even more preferably 10 parts by mass, even more preferably 15 parts by mass, based on 100 parts by mass of the metal phosphate. The upper limit of the content of the nitrite is more preferably 70 parts by mass, even more preferably 60 parts by mass, more preferably 50 parts by mass, even more preferably 40 parts by mass, and even more preferably 30 parts by mass, based on 100 parts by mass of the metal phosphate.

### [The hardener]

In addition to the metal phosphate and the organic resin, the surface treatment agent may contain a hardener. The hardener hardens the organic resin. For example, one or more hardeners selected from the group consisting of polyamine hardeners, acid anhydride hardeners, and initial condensation products containing methylol groups can be used.

Polyamine hardeners are, for example, one or more selected from the group consisting of aliphatic polyamines, alicyclic polyamines, aromatic polyamines, polyamide polyamines, and modified polyamines.

Acid anhydride hardeners are, for example, one or more selected from the group consisting of monofunctional acid anhydrides (phthalic anhydride, hexahydro phthalic anhydride, methyl tetrahydro phthalic anhydride, methyl hexahydro phthalic anhydride, methyl nadic anhydride, trimellitic anhydride, etc.), bifunctional acid anhydrides (pyromellitic anhydride, benzophenone tetracarboxylic anhydride, ethylene glycol bis(anhydrotrimate), methylcyclohexene tetracarboxylic anhydride, etc.), and free acid anhydrides (trimellitic anhydride, polyazelaic anhydride, etc.).

The methylol group-containing initial condensates are, for example, one or more selected from the group consisting of novolac or resol phenolic resins, urea resins, and melamine resins.

When contained, the hardener content in the surface treatment agent is 0 to 50.0 parts by mass based on 100 parts by mass of the metal phosphate. When a hardener is included in the surface treatment agent, the hardener promotes curing of the organic resin. If the content of the hardener is less than 50.0 parts by mass, the adhesion of the insulating coating film 20 to the base metal steel sheet 10 is more stably enhanced. Therefore, when the hardener is included, the content of the hardener in the surface treatment agent should be 0 to 50.0 parts by mass based on 100 parts by mass of the metal phosphate.

A preferred lower limit of the content of the hardener is 0.5 parts by mass, and more preferably 1.0 parts by mass, and even more preferably 2.0 parts by mass, based on 100 parts by mass of the metal phosphate. A preferred upper limit of the content of the hardener is 45.0 parts by mass, more preferably 40.0 parts by mass, and even more preferably 35.0 parts by mass, based on 100 parts by mass of the metal phosphate.

Note that the organic resin and the hardener in the surface treatment agent finally become the organic resin 202 in the insulating coating film 20 through the baking process described below. Therefore, the total content of the organic resin and the hardener in the surface treatment agent is preferably 0 to 50.0 parts by mass based on 100 parts by mass of the metal phosphate.

### [Baking process]

In the baking process, the base metal steel sheet 10 coated with the surface treatment agent is heated to form the insulating coating film 20. The conditions for baking are: heat treatment temperature of 200 to 450°C, dew point of -30 to 30°C, and heat treatment time of 10 to 120 seconds.

### Heat treatment temperature: 200 to 450°C

If the heat treatment temperature is less than 200°C, the deliydration reaction of the metal phosphate does not proceed sufficiently. For that reason, the insulating coating film 20 cannot be properly formed. On the other hand, when the heat treatment temperature exceeds 450°C, the organic resin decomposes thermally. For that reason, the insulating coating film 20 cannot be properly formed. Therefore, the heat treatment temperature is 200 to 450°C. A preferred lower limit of the heat treatment temperature is 250°C, more preferably 280°C, and even more preferably 300°C. A preferred upper limit of the heat treatment temperature is 430°C, more preferably 400°C, even more preferably 380°C, more preferably 350°C, and even more preferably 320°C.

### Dew point: -30 to 30°C

If the dew point is less than -30°C, there is a risk of void formation due to sudden boiling. On the other hand, if the dew point is above 30°C, evaporation of water takes longer, which may delay the progress of crystallization of the metal phosphate. Therefore, the dew point is -30 to 30°C. A preferred lower limit of the dew point is -15°C, and more preferably -10°C. A preferred upper limit of the dew point is 20°C.

### Heat treatment time: 10 to 120 seconds

If the heat treatment time is less than 10 seconds, the metal phosphate does not crystallize sufficiently. Therefore, the insulating coating film 20 cannot be properly formed. On the other hand, if the heat treatment time exceeds 120 seconds, the organic resin melts due to excessive heating. Furthermore, if the heat treatment time exceeds 120 seconds, the organic resin may thermally decompose, causing the insulating coating film 20 to powder. Therefore, the heat treatment time is 10 to 120 seconds. A preferred lower limit of the heat treatment time is 15 seconds, more preferably 20 seconds, even more preferably 25 seconds, and more preferably 30 seconds. A preferred upper limit of the heat treatment time is 100 seconds, more preferably 90 seconds, even more preferably 80 seconds, more preferably 70 seconds, and even more preferably 60 seconds.

For example, a surface treatment agent contains a metal phosphate, an organic resin, and 5 to 80 parts by mass of a nitrite for 100 parts by mass of the metal phosphate. The insulating coating film 20 having a nitrogen content of 0.05 to 5.00% by mass can be formed by appropriately adjusting the surface treatment agent within the range of the baking conditions described above and performing heat treatment. By appropriately controlling the conditions in the baking process, it is possible to suppress volatilization of nitrogen contained in the nitrite and control the nitrogen content within the above range.

By the above manufacturing process, the non-oriented electrical steel sheet 1 is produced.

### EXAMPLE

The effects of the non-oriented electrical steel of the present embodiment will be described more specifically by means of examples. The conditions in the following examples are examples of conditions adopted to confirm the feasibility and effectiveness of the non-oriented electrical steel sheet of the present embodiment. Therefore, the non-oriented electrical steel sheet of the present embodiment is not limited to this one condition example.

A base metal steel sheet (non-oriented electrical steel sheet) with a thickness of 0.25 mm was prepared. The base metal steel sheet contained Si: 3.1%, Al: 0.6%, Mn: 0.2% by mass, and the remainder being Fe and impurities. The applying process was performed on the prepared base metal steel sheet. Specifically, surface treatment agents with the compositions shown in Table 1 were applied to the surface of the base metal steel sheet using a rubber roll type coating device.

### [Table 1]

**Table 1**

| Surface treatment agent No. | Metal phosphate (100 parts by mass) | Nitrite | | Organic resin | |
|---|---|---|---|---|---|
| | | Types | Blending amount | Types | Blending amount |
| 1 | Al phosphate | A | 20 | a | 20 |
| 2 | Al phosphate | B | 10 | b | 10 |
| 3 | Al phosphate:5+Mg phosphate:5 | A | 30 | c | 30 |
| 4 | Al phosphate:6+Mo phosphate:4 | B | 10 | a | 10 |
| 5 | Al phosphate:4+Zn phosphate:6 | C | 20 | b | 20 |
| 6 | Al phosphate:8+Mn phosphate:2 | D | 3 | c | 3 |
| 7 | Al phosphate:3+Zn phosphate:7 | E | 45 | a | 45 |
| 8 | Mg phosphate:6+Mo phosphate:4 | C | 1 | a | 20 |
| 9 | Al phosphate | B | 90 | b | 10 |
| 10 | A1 phosphate | - | - | c | 20 |

The "Metal phosphate (100 mass parts)" column in Table 1 indicates the type of metal phosphate contained in the surface treatment agent and the mass ratio in the metal phosphate. For example, in test number 1, the metal phosphate consists of Al phosphate. In test number 3, the metal phosphate consists of Al phosphate and Mg phosphate in a ratio of 5:5 by mass. In test number 4, the metal phosphate consists of Al phosphate and Mo phosphate in a ratio of 6:4 by mass.

In Table 1, "Types" A to E in the "Nitrite" column are as follows.
A: Lithium nitrite (LiNO₂)
B: Sodium nitrite (NaNO₂)
C: Calcium nitrite (Ca(NO₂)₂)
D: Potassium nitrite (KNO₂)
E: Ammonium nitrite (NH₄NO₂)

In Table 1, the "Blending amount" in the "Nitrite" column indicates the mass parts of nitrite when the metal phosphate is 100 parts by mass. Surface treatment agents marked with "-" indicate that no nitrite was included.

In Table 1, "Types" a to c in the "Organic Resins" column are as follows.
a: Amine compound-containing epoxy resin emulsion, in which bisphenol-A epoxy resin with an epoxy equivalent weight of 5000 is modified with methacrylic acid and ethyl acrylate to form an acrylic modified epoxy resin, which is emulsified by further reacting with dimethylethanolamine.
b: Self-emulsifying epoxy resin which is produced by modifying phenolic novolac epoxy resin with ethylene-propylene block copolymer and nonylphenyl ether ethylene oxide.
c: Epoxy resin emulsions made by forcibly stirring bisphenol-A epoxy resin with an epoxy equivalent weight of 300 into an emulsion using an emulsifier.

In Table 1, the "Blending amount" in the "Organic resin" column indicates the mass part of the organic resin when the metal phosphate is 100 mass parts.

The surface treatment agent of each number was applied to the surface of the base metal steel sheet so that the amount applied was 0.8 g/m². The baking process was performed on the base metal steel sheets to which the surface treatment agent was applied. The heat treatment temperature was 300°C, the dew point was 30°C, and the heat treatment time was 60 seconds, for each test number. By the above process, non-oriented electrical steel sheets with an insulating coating film formed on the surface of the base metal steel sheet was produced.

### [Table 2]

**Table 2**

| Test No. | Surface treatment agent No. | Properties before stress relief annealing | | | | | | Properties after stress relief annealing |
|---|---|---|---|---|---|---|---|---|
| | | Phosphate content (mass%) | P content (mass%, in terms of H₂PO₄) | [N] concentration (%) | Insulation properties | Corrosion resistance | Elution resistance | Adhesion |
| 1 | 1 | 79 | 73 | 2.10 | A | 8 | 46 | A |
| 2 | 2 | 85 | 78 | 3.60 | A | 10 | 58 | B |
| 3 | 3 | 71 | 66 | 1.40 | A | 8 | 21 | A |
| 4 | 4 | 85 | 73 | 2.90 | B | 9 | 120 | A |
| 5 | 5 | 72 | 62 | 0.60 | B | 7 | 87 | B |
| 6 | 6 | 94 | 85 | 4.60 | B | 9 | 110 | B |
| 7 | 7 | 69 | 58 | 1.10 | B | 8 | 28 | B |
| 8 | 8 | 83 | 70 | 0.01 | B | 7 | 41 | D |
| 9 | 9 | 56 | 52 | 6.30 | B | 8 | 121 | C |
| 10 | 10 | 83 | 77 | 0 | C | 4 | 97 | E |

### [Evaluation test 1]

The non-oriented electrical steel sheets were subjected to the following tests: measurement test of phosphate and phosphorus contents, measurement test of nitrogen content by EDS, insulation evaluation test, corrosion resistance evaluation test, elution resistance evaluation test, inclusion identification test by GC/MS method, and nitrite identification test.

### [Measurement test of phosphate and phosphorus contents]

The content of P and metal elements were measured by SEM-EDS. P was then converted as phosphoric acid of H₂PO₄ and its content was calculated. The metal phosphate was calculated as M(H₂PO₄)ₓ (where M is the metal element and x is the valence of the metal element), and the calculated sum of the metal element and phosphoric acid was used as the metal phosphate content.

### [Measurement test of nitrogen content by EDS]

The nitrogen content in the insulating coating film of the non-oriented electrical steel sheet of each test number was measured by the following method. An energy dispersive X-ray analyzer was used to measure the content of each element in the insulating coating film on the non-oriented electrical steel sheet on which the insulating coating film was formed. The analysis was performed on the surface of any five locations on the non-oriented electrical steel sheet (insulating coating film). From the analysis results, the peak intensity of iron (Fe) was excluded and the nitrogen content (mass%) was obtained by taking the sum of the peaks of the remaining elements as 100 mass%. The results are shown in the "Properties before stress relief annealing, [N] concentration (%)" column in Table 2.

### [Insulation properties evaluation test]

Insulation properties were evaluated for the non-oriented electrical steel sheets of each test number by the following method: JIS C2550-4:2019, the interlaminar resistance of the non-oriented electrical steel sheet of each test number was measured. Based on the obtained interlaminar resistance, the insulation properties were evaluated as follows.

A: Interlaminar resistance is 30 Ω ·cm²/sheet or higher
B: Interlaminar resistance is 10 Ω ·cm²/sheet to less than 30 Ωcm²/sheet
C: Interlaminar resistance is 3Ω ·cm²/sheet to less than 10 Ωcm²/sheet
D: Interlaminar resistance is less than 3Ω ·cm²/sheet

The obtained insulation properties evaluation is shown in the "Properties before stress relief annealing, Insulation properties" column of Table 2. Ratings A and B were considered acceptable.

### [Corrosion resistance evaluation test]

Corrosion resistance was evaluated for each test number of non-oriented electrical steel sheet by the following method. From the non-oriented electrical steel sheet of each test number, a steel sheet sample of 30 mm in width and 300 mm in length was taken. In accordance with the salt spray test described in JIS Z2371:2015, a 5% NaCl solution was allowed to fall naturally on the steel sheet samples for 7 hours in an atmosphere of 35°C. After that, the area ratio of the area on the surface of the steel sheet sample where rust was generated (hereinafter referred to as "rusting area ratio") on the surface of the steel sheet sample was determined. Corrosion resistance was evaluated according to the rusting area ratio using the following 10-point scale.

10: Rusting area ratio is 0%.
9: Rusting area ratio is 0.10% or less.
8: Rusting area ratio is more than 0.10% and 0.25% or less.
7: Rusting area ratio is more than 0.25% and 0.50% or less.
6: Rusting area ratio is more than 0.50% and 1.00% or less.
5: Rusting area ratio is more than 1.00% and 2.50% or less.
4: Rusting area ratio is more than 2.50% and 5.00% or less.
3: Rusting area ratio is more than 5.00% and 10.00% or less.
2: Rusting area ratio is more than 10.00% and 25.00% or less.
1: Rusting area ratio is more than 25.00% and 50.00% or less.

The obtained corrosion resistance is shown in Table 2, "Properties before stress relief annealing. Corrosion resistance" column. A score of 5 or more was considered acceptable.

### [Elution resistance evaluation Test]

Elution resistance was evaluated for each test number of non-oriented electrical steel sheet by the following method. Samples of steel sheets 30 mm wide and 300 mm long were taken from the non-oriented electrical steel sheet of each test number. The steel sheet samples were boiled in boiling pure water for 10 minutes. The amount of phosphoric acid eluted into the pure water (solution) after boiling was measured. Specifically, the pure water (solution) after boiling was cooled. The solution was diluted with pure water, and the concentration of phosphoric acid in the solution was measured by ICP-AES. From the dilution ratio, the amount of phosphoric acid eluted (mg/m²) was determined. The results are shown in Table 2, "Properties before stress relief annealing, Elution resistance" column. If the eluted amount of phosphoric acid was less than 140 mg/m², the material was judged as acceptable (excellent elution resistance).

### [Inclusion identification test by GC/MS]

The organic resin in the insulating coating film of each test number was identified by the following method. The presence or absence of organic resins and the type of organic resins were identified by analyzing the gas generation behavior of the non-oriented electrical steel sheet with an insulating coating film formed when heated using the GC/MS method. As a result, it was confirmed that the insulating coating films of all test numbers contained epoxy resin.

### [Identification of nitrite]

Nitrite in the insulating coating film of each test number was identified by the following method. A portion of the insulating coating film was taken and crushed in a mortar. Distilled water was added to the mortar containing the crushed insulating coating film to obtain a suspension. Arsanyl acid was added to the suspension, and the arsanyl acid reacted with the nitrite in the suspension. This resulted in a synthesis of a diazonium compound. Naphthylethylenediamine was added to the suspension, and the naphthylethylenediamine reacted with the diazonium compound. This resulted in the synthesis of an azo dye. The fact that the azo dye was synthesized was identified by checking the coloration of the suspension with a colorimeter (colorimetric method). The above methods were used to identify the presence of nitrite in the suspension. As a result, it was confirmed that the insulating coating films of test numbers 1-9 contained nitrite.

### [Evaluation test 2]

Adhesion evaluation tests were conducted on the non-oriented electrical steel sheet of each test number.

### [Adhesion evaluation test]

Adhesion was evaluated on the non-oriented steel sheet of each test number by the following method. Samples of steel sheets 30 mm wide and 300 mm long were taken from the non-oriented electrical steel sheet of each test number. The steel sheet samples were subjected to stress relief annealing. In the stress relief annealing, the annealing temperature was set to 800°C in a nitrogen stream and the annealing time was 2 hours. Adhesive tape was applied to the insulating coating film on the steel sheet sample after stress relief annealing. The steel sheet sample with adhesive tape attached was wound around a 10 mm diameter metal bar. The steel sheet sample was then released from the metal bar. That is, the steel sheet sample was given a 10 mm diameter bend. The adhesive tape was then pulled off from the steel sheet sample, and the percentage of the insulating coating film that remained without peeling off from the base metal steel sheet (area ratio) was measured. Based on the obtained area ratio, the adhesion was evaluated as follows.

A: The area ratio of the remaining insulating coating film was 100%. That is, the insulating coating film did not peel off.
B: The area ratio of the remaining insulating coating film was 90% or more and less than 100%.
C: The area ratio of the remaining insulating coating film was 50% or more and less than 90%.
D: The area ratio of the remaining insulating coating film was 25% or more and less than 50%.
E: The area ratio of the remaining insulating coating film was less than 25%.

The obtained adhesion evaluations are shown in the "Properties after stress relief annealing, Adhesion" column of Table 2. Evaluations A and B were judged as acceptable.

### [Evaluation results]

The evaluation results are shown in Table 2. Referring to Table 2, the insulating coating films of the non-oriented electrical steel sheets of test numbers 1 to 7 contained a metal phosphate, an organic resin, and a nitrite. Furthermore, the nitrogen contents in the insulating coating films ranged from 0.05 to 5.00 mass%. As a result, the insulating coating films of test numbers 1 to 7 exhibited excellent adhesion after stress relief annealing.

On the other hand, in test number 8, the nitrite content was too low. For that reason, the nitrogen content in the insulating coating film was less than 0.05 mass%. As a result, the insulating coating film of test No. 8 did not improve adhesion after stress relief annealing.

The insulating coating film of test No. 9 contained too much nitrite. For that reason, the nitrogen content in the insulating coating film exceeded 5.00 mass%. As a result, the insulating coating film of test No. 9 did not improve adhesion after stress relief annealing.

The insulating coating film of test No. 10 did not contain any nitrite. As a result, the insulating coating film of test No. 10 did not improve adhesion after stress relief annealing.

The above is a description of embodiments of the present disclosure. However, the above-described embodiments are merely examples for implementing the present disclosure. Therefore, the present disclosure is not limited to the above-described embodiments, and may be implemented by modifying the above-described embodiments as appropriate to the extent that the intent is not departed from.

### REFERENCE SIGNS LIST

1. non-oriented electrical steel sheet
10. base metal steel sheet
20. insulating coating film
201. metal phosphate
202. organic resin

## Claims

1. A non-oriented electrical steel sheet comprising:
a base metal steel sheet; and
an insulating coating film formed on a surface of the base metal steel sheet,
wherein the insulating coating film comprises:
a metal phosphate,
an organic resin, and
a nitrite; and
a nitrogen content of the insulating coating film is 0.05 to 5.00 mass%.

2. The non-oriented electrical steel sheet according to claim 1,
wherein the metal phosphate is one or more selected from the group of Zn phosphate, Mn phosphate, Al phosphate and Mo phosphate.

3. The non-oriented electrical steel sheet according to claim 1 or 2,
wherein the organic resin is one or more selected from the group of epoxy resins, acrylic resins, and melamine resins.

4. The non-oriented electrical sheet according to any one of claims 1 to 3,
wherein the nitrite is one or more selected from the group of lithium nitrite, calcium nitrite, potassium nitrite, sodium nitrite, and ammonium nitrite.

5. The non-oriented electrical sheet according to any one of claims 1 to 4,
wherein the insulating coating film contains 3 to 50 parts by mass of the organic resin for 100 parts by mass of the metal phosphate.

6. The non-oriented electrical sheet according to any one of claims 1 to 5,
wherein the base metal steel sheet contains, by mass%,
Si: 2.5 to 4.5%,
Al: 0.1 to 1.5%, and
Mn: 0.2 to 4.0%.

7. A method for manufacturing the non-oriented electrical steel sheet described in any one of claims 1 to 6, comprising:
a process for applying a surface treatment agent containing a metal phosphate, an organic resin, and a nitrite to a surface of a base metal steel sheet; and
a process for forming an insulating coating film with a nitrogen content of 0.05 to 5.00 mass% by heating the base metal steel sheet coated with the surface treatment agent under conditions of heat treatment temperature: 200 to 450°C, dew point: -30 to 30°C, and heat treatment time: 10 to 120 seconds.
